# EUROPÄISCHE PATENTSCHRIFT

(11) **EP 3 161 312 B1**
(45) Veröffentlichungstag und Bekanntmachung des Hinweises auf die Patenterteilung: **18.08.2021**
(21) Anmeldenummer: 15729094.1
(22) Anmeldetag: 29.05.2015
(51) Int. Cl.: F04B 1/04, B60T 8/40, F04B 53/10, F16K 15/04, F04B 53/12

(54) **AUSLASSVENTIL MIT EINEM AUFNAHMEELEMENT**
DISCHARGE VALVE COMPRISING A RECEIVING ELEMENT
SOUPAPE D'ÉVACUATION COMPRENANT UN ÉLÉMENT DE RÉCEPTION

(30) Priorität: 26.06.2014 DE 102014212292
(43) Veröffentlichungstag der Anmeldung: 03.05.2017
(73) Patentinhaber: Robert Bosch GmbH, 70442 Stuttgart (DE)
(72) Erfinder: HAEUSSER, Bernd, 74382 Neckarwestheim (DE); STOTZ, Rolf, 71665 Vaihingen (DE)
(86) Internationale Anmeldenummer: PCT/EP2015/061983
(87) Internationale Veröffentlichungsnummer: WO 2015/197307

(56) Entgegenhaltungen:
- GB-A- 2 476 157
- US-A- 5 609 182
- US-B1- 6 622 751

## Beschreibung

### Stand der Technik

Die Erfindung betrifft ein Auslassventil für eine Hydraulikpumpe eines Hydraulikaggregats, mit einer von einem Ventilkörper verschließbaren Ventilöffnung und einem an die Ventilöffnung angrenzenden Aufnahmeelement zum Aufnehmen des Ventilkörpers in einem darin ausgebildeten Hohlraum. Ähnliche Auslassventile sind beispielsweise aus US 5609182 A und GB 2476157 A bekannt.

Gattungsgemäße Hydraulikaggregate werden insbesondere in Fahrzeugbremsanlagen für ABS- und ESP-Bremssysteme verwendet, um dort geregelte Bremsdrücke an Radbremsen eines zugehörigen Kraftfahrzeugs zu erzeugen. Das Hydraulikaggregat umfasst eine Hydraulikpumpe, die nach dem Prinzip einer Kolbenpumpe arbeitet. Dabei sind in der Regel mehrere Pumpenelemente in einem blockförmigen Pumpengehäuse vorgesehen. Jedes Pumpenelement weist ein Auslassventil zum Auslassen von zu förderndem Fluid durch eine Ventilöffnung an einer Stirnseite eines becherförmigen Pumpenzylinders auf. Im Pumpenzylinder ist ein Kolben axial verschiebbar gelagert, der mit einem seiner Enden in den Pumpenzylinder hineinragt und an seinem anderen Ende mittels einer von einem Pumpenmotor angetriebenen Exzenterwelle abgestützt und angetrieben ist. Die Exzenterwelle erzeugt mittels rotatorischer Bewegungen eine sinusförmige translatorische Hubbewegung des Kolbens, mit der Fluid gefördert und unter Druck gesetzt werden kann.

Bei einem Hineinbewegen des Kolbens in den Pumpenzylinder wird das Fluid gegen die Stirnseite des Pumpenzylinders gedrängt. Derart gedrängt hebt das Fluid einen Ventilkörper von einem die Ventilöffnung umgebenden Ventilsitz ab und drückt den Ventilkörper gegen eine Rückstellfeder, die sich in einem kreiszylindrischen Hohlraum eines am Pumpenzylinder angeordneten Ventildeckels befindet. Dabei dient der Ventildeckel für den Ventilkörper auch als Aufnahmeelement, in dem der Ventilkörper teilweise bereits im Ruhezustand aufgenommen ist.

Beim Abheben des Ventilkörpers vom Ventilsitz wird der Ventilkörper in den Hohlraum des derartigen Aufnahmeelements hinein verschoben, die Ventilöffnung wird geöffnet und das Fluid strömt am Ventilkörper vorbei aus dem Pumpenzylinder ab. Das derart abströmende Fluid ist, wie beispielsweise in EP 0 446 454 B1 beschrieben, mittels eines Abströmkanals in das Pumpengehäuse geführt. Während des Abströmens treten Schwingungen des Ventilkörpers auf, die unter anderem auch für unerwünschte Geräusche während des Förderns von Fluid im Hydraulikaggregat verantwortlich sind.

Aus US 6622751 B1 ist ein Auslassventil für eine Hydraulikpumpe bekannt, mit einer von einem Ventilkörper verschließbaren Ventilöffnung und einem an die Ventilöffnung angrenzenden Aufnahmeelement zum Aufnehmen des Ventilkörpers. Dabei weist das Aufnahmeelement einen Hohlraum mit einer Innenwand auf, in der eine zusätzliche Öffnung vorgesehen ist. Die Öffnung ist von der Innenwand radial nach außen gerichtet und hat einen kleineren Durchmesser als der Ventilkörper. Der Ventilkörper kann folglich nicht in die Öffnung eintreten. Durch die Öffnung hindurch kann Fluid aus dem Hohlraum um den Ventilkörper herum fließen. Damit sollen unerwünschte Geräusche reduziert werden.

### Offenbarung der Erfindung

Erfindungsgemäß ist ein Auslassventil für eine Hydraulikpumpe eines Hydraulikaggregats geschaffen, mit einer von einem Ventilkörper verschließbaren Ventilöffnung und einem an die Ventilöffnung angrenzenden Aufnahmeelement zum Aufnehmen des Ventilkörpers in einem darin ausgebildeten Hohlraum, der eine Längsachse und eine Innenwand umfasst. Dabei weist die Innenwand eine radial nach außen gerichtete Tasche auf, in die der Ventilkörper eintreten kann. Die Tasche bildet insbesondere eine Ausbuchtung des Hohlraums bzw. Vertiefung der Innenwand und ist damit exzentrisch zur Längsachse des Hohlraums angeordnet. Mittels der derartigen Tasche kann sich der Ventilkörper aus dem eigentlichen Hohlraum heraus in die Tasche hineinbewegen und kann damit einer dort herrschenden Strömung des Fluides ausweichen. Die um den Ventilkörper auftretende Strömung des Fluides hält den Ventilkörper lokalisiert in und/oder an der Tasche.

Der Erfindung liegt die Erkenntnis zugrunde, dass das Aufnahmeelement mit seinem Hohlraum den Ventilkörper zentrisch vor der Ventilöffnung an einem die Ventilöffnung umgebenden Ventilsitz halten muss. Andernfalls würde der Ventilkörper die Ventilöffnung nicht vollumfänglich verschließen. Dazu weist der Hohlraum bekanntermaßen mit seiner Innenwand eine Längsachse auf, die zumindest annähernd deckungsgleich zu einer Längsachse der Ventilöffnung ist. Erfindungsgemäß ist nun an der Innenwand eine radial nach außen gerichtete Tasche vorgesehen. Eine solche Tasche ermöglicht, dass der Ventilkörper in vom Ventilsitz abgehobenem Zustand exzentrisch zur Längsachse des Hohlraums und damit zur Längsachse der Ventilöffnung positioniert ist. Während des Öffnens der Ventilöffnung wird dazu der Ventilkörper zunächst aus seiner zentrischen Lage abgehoben. Auf den abgehobenen Ventilkörper wirkt dann die erfindungsgemäße Tasche in Verbindung mit der Strömung des Fluides, mittels derer der Ventilkörper in eine exzentrische Lage in Bezug auf die Längsachse des Hohlraums bewegt wird. Damit wird der Ventilkörper also aus der Mitte des Hohlraums herausgeführt und besonders an seiner von der Tasche abgewandten Seite von Fluid umströmt, sodass eine definiert verstärkte Strömungsführung nur an einer Seite des Ventilkörpers erfolgt. Eine solche Strömungsführung drängt den Ventilkörper an bzw. in die Tasche. Damit ist der Ventilkörper hinsichtlich seiner Lage zentriert und lagedefiniert gehalten. Derart gehalten kann der Ventilkörper bei durch die Ventilöffnung strömendem bzw. abströmendem Fluid nicht mehr zum Schwingen angeregt werden, was unerwünschte Geräusche vermeidet und ein besonders geräuscharmes Auslassventil schafft.

Vorzugsweise ist der Ventilkörper dabei als Kugel gestaltet, die in einem vorzugsweise zylindrisch, insbesondere kreiszylindrisch gestalteten Hohlraum aufzunehmen ist. Mittels der Gestaltung als Kugel hat der Ventilkörper eine Kugeloberfläche, die ohne Ecken und Kanten immer die richtige Lage aufweist, um in die Tasche gleiten zu können. Besonders bevorzugt ist dazu die Tasche im Wesentlichen komplementär zu einem Teil der Kugeloberfläche gestaltet, damit die Kugel platzsparend und strömungstechnisch besonders günstig in der Tasche gehalten werden kann.

Ferner ist das Aufnahmeelement bauteilsparend bevorzugt zugleich ein Ventildeckel des Auslassventils.

Erfindungsgemäß vorteilhaft ist die Tasche ferner zur Ventilöffnung hin gerichtet offen. In eine derart offene Tasche kann sich der Ventilkörper beim Abheben von der Ventilöffnung sofort in die Tasche hineinbewegen, sodass der Ventilkörper sofort ausgerichtet und in der Tasche gehalten werden kann. Ohne jegliche Zeitverzögerung können also andernfalls auftretende Schwingungen des Ventilkörpers vermieden werden.

Gemäß der Erfindung ist die Tasche des Weiteren vorzugsweise zylindrisch, insbesondere kreiszylindrisch, und achsparallel zur Längsachse des Hohlraums ausgebildet. Derart ausgebildet kann sich der Ventilkörper ohne ansonsten störende Taschenvertiefungen oder -ausbuchtungen der Tasche in die Tasche hineinbewegen. In der Tasche kann sich der Ventilkörper zudem besonders platzsparend an der Taschenwand anlegen. Zusätzlich sind mit einer derart ausgebildeten Tasche Strömungsverwirbelungen im Fluidstrom nahezu vermieden, was den Ventilkörper bei abströmendem Fluid besonders stabil in und/oder an der Tasche hält.

Ferner erstreckt sich die Tasche erfindungsgemäß vorteilhaft im Querschnitt des Hohlraums betrachtet an dessen Innenwand über einen Winkel von 30° bis 180°, bevorzugt von 40° bis 120° und besonders bevorzugt von 50° bis 90°. Mit einem solchen Winkel ist in der Tasche genügend Platz geschaffen, um den Ventilkörper ausrichten und halten zu können. Zugleich ist derart der Platz beschränkt, womit die Lage des Ventilkörpers ausreichend definiert ist, um Schwingungen des Ventilkörpers im Fluidstrom vermeiden zu können.

Zudem ist axial zwischen der Tasche und der Ventilöffnung erfindungsgemäß vorzugsweise mindestens ein radialer Abströmkanal derart vorgesehen, dass bei einer orthogonalen Projektion auf eine Ebene des mindestens einen radialen Abströmkanals und der Tasche der mindestens eine radiale Abströmkanal an der Tasche angeordnet ist. Mit einem solchen radialen Abströmkanal kann Fluid insbesondere in einen Auslassbereich eines Pumpengehäuses zum weiteren Verrichten von Arbeit abgeleitet werden. Während des Ableitens herrscht ein Druckgefälle zwischen einem hohen Fluiddruck in Strömungsrichtung vor dem Ventilkörper und einem im Vergleich dazu niedrigen Fluiddruck in Strömungsrichtung nach dem Ventilkörper. Das derartige Druckgefälle führt insbesondere dazu, dass abströmendes Fluid einen Sog auf den Ventilkörper in Richtung des Abströmkanals ausübt. Es hat sich gezeigt, dass ein solcher Sog besonders stark auf einen Bereich in und um der erfindungsgemäßen Tasche wirkt, wenn die Tasche vorteilhaft bei orthogonaler Projektion auf eine Ebene an dem mindestens einen radialen Abströmkanal und damit insbesondere in dessen Nähe angeordnet ist. Derart angeordnet kann der Ventilkörper bei abströmendem Fluid besonders zuverlässig in und/oder an der Tasche gehalten werden.

Bevorzugt ist der mindestens eine radiale Abströmkanal bauteilsparend im Aufnahmeelement radial am Hohlraum angeordnet.

Des Weiteren ist der mindestens eine Abströmkanal gemäß der Erfindung vorteilhaft ein erster radialer Abströmkanal und ein zweiter radialer Abströmkanal, wobei sich der zweite radiale Abströmkanal asymmetrisch zum ersten radialen Abströmkanal erstreckt. Asymmetrisch bedeutet dabei insbesondere, dass der zweite radiale Abströmkanal weder punktsymmetrisch noch achsensymmetrisch zum ersten radialen Abströmkanal verläuft. Mit solchen asymmetrisch angeordneten Abströmkanälen werden während des Förderbetriebes vom Ventilkörper ausgeübte Schwingungen zusätzlich reduziert, zumal auch von einer Hubbewegung des Pumpenkolbens erzeugte Pulsationen im Fluidstrom gedämpft werden. Damit kann die erfindungsgemäße Tasche den Ventilkörper besonders zuverlässig und schwingungsarm halten.

Dazu ist die Tasche bevorzugt an der Innenwand des Hohlraums in orthogonaler Projektion auf eine Ebene zwischen dem ersten und dem zweiten radialen Abströmkanal angeordnet. Derart angeordnet kann das Fluid aus den beiden radialen Abströmkanälen abströmen und dabei einen besonders starken Sog auf die Tasche und den daran gehaltenen Ventilkörper ausüben. Vorteilhaft hat sich dazu ein Winkel zwischen dem ersten radialen Abströmkanal und dem zweiten radialen Abströmkanal von 30° bis 180°, bevorzugt von 40° bis 130° und besonders bevorzugt von 50° bis 100° erwiesen. Insbesondere sind die beiden radialen Abströmkanäle derart positioniert, dass sie sich in axialer Projektion im Querschnitt an der Tasche an deren Endbereichen befinden. Damit ist die Tasche in der Mitte der beiden radialen Abströmkanäle angeordnet, was Schwingungen im Fluid zusätzlich reduziert und die schwingungsmindernde Wirkung der Tasche verstärkt.

Zudem ist der mindestens eine radiale Abströmkanal erfindungsgemäß vorteilhaft fluidleitend an einem Umfangskanal angeordnet, der einen die Ventilöffnung umgebenden Ventilsitz mit dessen Ventilsitzumfang vollumfänglich umgibt. Bevorzugt ist der Umfangskanal dazu im Aufnahmeelement an der Innenwand des Hohlraums axial zwischen der Ventilöffnung und der Tasche angeordnet. Derart angeordnet kann durch die Ventilöffnung strömendes Fluid über den gesamten Ventilsitzumfang hinweg sofort abgeführt werden, was schwingungsreduzierend einen Fluidstau um den Ventilkörper vermeidet. Ferner verteilt der Umfangskanal das abströmende Fluid zugleich auf mehrere radiale Abströmkanäle, insbesondere auf den ersten und zweiten radialen Abströmkanal. Zudem verhindert der Umfangskanal bei abströmendem Fluid, dass sich der Ventilkörper an dem mindestens einen Abströmkanal anlegt, was andernfalls das Fluid in seinem Volumenstrom drosseln würde.

Ein solcher Umfangskanal schafft in Kombination mit der erfindungsgemäßen Tasche ein Auslassventil, das einen besonders schwingungs- und geräuscharmen Betrieb des Hydraulikaggregats ermöglicht. Im Gegensatz dazu treten in herkömmlichen Auslassventilen mit einem sich entlang des gesamten Ventilsitzumfanges erstreckenden Umfangskanals oftmals unerwünschte Geräusche auf. Solche unerwünschten Geräusche entstehen bei abgehobenem Ventilkörper mittels sich ständig ändernder Druckunterschiede im Fluiddruck am Ventilkörper, insbesondere, wenn am Umfangskanal mehrere radiale Abströmkanäle angeordnet sind. Der Ventilkörper bewegt sich dabei mit dem Volumenstrom, folgt insbesondere dem Volumenstrom, verändert also seine Position und damit ständig das Druckniveau des Fluiddrucks am Ventilkörper. Mit den ständigen Änderungen des Druckniveaus können sich auftretende Schwingungen des Ventilkörpers verstärken, was schließlich zu einem Aufschaukeln des Ventilkörpers und zu unerwünschten Geräuschen führt. Ein solches Aufschaukeln wird mit der erfindungsgemäßen Tasche vermieden.

Weiterhin ist der mindestens eine radiale Abströmkanal fluidleitend gemäß der Erfindung vorzugsweise an einem Segmentkanal angeordnet, der den die Ventilöffnung umgebenden Ventilsitz mit dessen Ventilsitzumfang nur entlang eines begrenzten Segments des Ventilsitzumfangs umgibt. Es hat sich gezeigt, dass im Segmentkanal ein am abgehobenen Ventilkörper auftretender Druckunterschied bzw. das dortige Druckgefälle im Fluid weitgehend konstant bleibt, sich also nicht ändert. Damit ist ein definiertes Druckgefälle zwischen einem hohen Fluiddruck in Strömungsrichtung vor dem Ventilkörper und einem im Vergleich dazu niedrigen Fluiddruck in Strömungsrichtung nach dem Ventilkörper, das heißt in Richtung des Segmentkanals geschaffen. Der Ventilkörper wird mittels des derart definierten Druckgefälles zielgerichtet in Richtung des Segmentkanals sowie in Richtung des mindestens einen Abströmkanals gesaugt und in die Tasche gedrückt.

Bevorzugt ist der Segmentkanal im Aufnahmeelement an der Innenwand des Hohlraums axial zwischen dem Umfangskanal und der Tasche angeordnet. Besonders bevorzugt weist der Segmentkanal dabei ferner eine geringere Segmentkanalbreite als der Umfangskanal mit seiner Umfangskanalbreite und eine größere Segmentkanalbreite als die Tasche mit ihrer Taschenbreite auf. Damit ist an der Innenwand des Hohlraums eine, im Längsschnitt betrachtet, gestufte Anordnung geschaffen, an der der Ventilkörper ungehindert regelrecht in die Tasche hinein "rutschen" bzw. gleiten kann.

Erfindungsgemäß vorteilhaft erstreckt sich das begrenzte Segment ferner über einen Winkel zwischen 90° und 180°, bevorzugt zwischen 110° und 160°. Mit einem solchen Winkel erstreckt sich eine den Segmentkanal begrenzende Kanalwand über einen hinreichend großen Bereich, der ausreichend Platz zum Auflegen bzw. Anlegen des Ventilkörpers schafft. Zudem ist das Segment auf ein Maß beschränkt, mit dem der Ort für den Ventilkörper im vom Ventilsitz abgehobenen Zustand derart festgelegt ist, dass der Ventilkörper mit dem dann vorbeiströmenden Fluid seine Position besonders zuverlässig beibehält. Damit kann der Ventilkörper gezielt in die Tasche gedrängt werden.

Überdies ist der mindestens eine radiale Abströmkanal gemäß der Erfindung vorzugsweise fluidleitend mit einem Außenkanal verbunden, der sich umfänglich außerhalb des Umfangskanals über den gesamten Ventilsitzumfang erstreckt und dazu bevorzugt im Aufnahmeelement angeordnet ist. Derart verbunden wird beim Förderbetrieb sämtliches Fluid durch den mindestens einen Abströmkanal in einen solchen vollumfänglichen Außenkanal geleitet. Das Fluid wird damit vollumfänglich verteilt, womit Pulsationen im Fluidstrom gedämmt werden und der Ventilkörper zuverlässig in der Tasche gehalten werden kann.

Ferner ist die Erfindung auch auf eine Verwendung eines derartigen Auslassventils in einem Hydraulikaggregat einer Fahrzeugbremsanlage gerichtet. Damit fördert eine zum Hydraulikaggregat gehörige Hydraulikpumpe besonders geräuscharm und gleichmäßig Fluid, sodass auch die Fahrzeugbremsanlage entsprechend geräuscharm betrieben wird.

Nachfolgend wird ein Ausführungsbeispiel der erfindungsgemäßen Lösung anhand der beigefügten schematischen Zeichnungen näher erläutert. Es zeigt:
- Fig. 1: einen Längsschnitt einer Hydraulikpumpe für eine Fahrzeugbremsanlage gemäß dem Stand der Technik mit einem zugehörigen Auslassventil,
- Fig. 2: eine perspektivische Ansicht eines Ventildeckels eines Ausführungsbeispiels eines erfindungsgemäßen Auslassventils und
- Fig. 3: den Schnitt III gemäß Fig. 2.

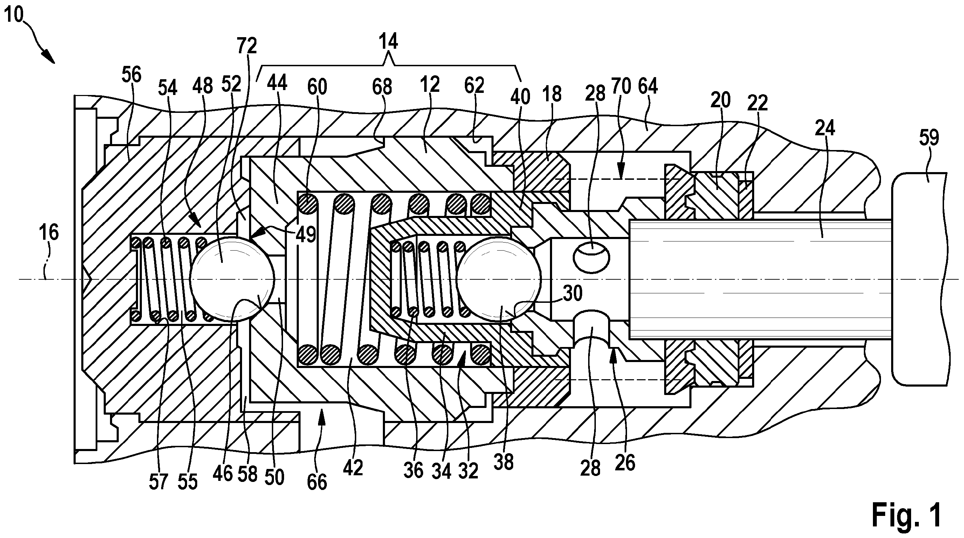

In Fig. 1 ist eine Hydraulikpumpe 10 für eine hydraulische Fahrzeugbremsanlage veranschaulicht. Die Hydraulikpumpe 10 ist zum Fördern von Fluid, vorliegend Bremsfluid, vorgesehen und arbeitet nach dem Prinzip einer Kolbenpumpe. Dazu umfasst die Hydraulikpumpe 10 einen becherförmigen Zylinder 12, dessen Zylinderwand 14 sich längs einer Zylinderachse 16 erstreckt. An der offenen Stirnseite der Zylinderwand 14 befindet sich eine Filterhülse 18 und an diese anschließend ein Niederdruckdichtring 20 sowie ein Stützring 22.

Im Niederdruckdichtring 20 ist eine Kolbenstange 24 eines Kolbens geführt, zu dem ferner ein sich an die Kolbenstange 24 in Axialrichtung anschließendes Ventilsitzteil 26 gehört. Im Ventilsitzteil 26 sind drei Einlassöffnungen 28 ausgebildet, zum Zuleiten von Bremsfluid aus einem Niederdruckbereich nach radial innen zu einem Ventilsitz 30 eines Einlassventils 32. Zum Einlassventil 32 gehören ferner ein Ventilkäfig 34 sowie eine darin gehalterte, schraubenförmige Rückstellfeder 36 und ein kugelförmiger Schließkörper 38 als Ventilkörper. Der Ventilkäfig 34 ist einstückig mit einem Hochdruckdichtring 40 ausgebildet, der an der Innenseite der Zylinderwand 14 abdichtet und damit in dem Zylinder 12 einen Druckraum 42 für das zu fördernde Fluid abgrenzt.

Im kreisförmigen Zylinderboden 44 des Zylinders 12 befindet sich mittig ein kegelstumpfförmiger Ventilsitz 46 eines Auslassventils 48. Der Ventilsitz 46 weist einen kreisförmigen Ventilsitzumfang 49 auf und umgibt eine kreisrunde Ventilöffnung 50, die mit einem kugelförmigen Schließkörper bzw. Ventilkörper 52 verschließbar ist. Der Ventilkörper 52 wird mittels einer schraubenförmigen Rückstellfeder 54 gegen den Ventilsitz 46 gedrängt, die dazu in einem Hohlraum 55 eines Ventildeckels 56 untergebracht ist und sich an dem Ventildeckel 56 abstützt. Der Hohlraum 55 hat als Längsachse die Zylinderachse 16 und ist als Hohlzylinder mit einer als Zylindermantel gestalteten Innenwand 57 ausgebildet. Zudem dient der Hohlraum 55 als Aufnahmeelement zum Aufnehmen des Ventilkörpers 52. Wenn der Ventilkörper 52 von durch die Ventilöffnung 50 strömendem Fluid vom Ventilsitz 46 entgegen einer Federkraft der Rückstellfeder 54 abgehoben wird, wird der Ventilkörper 52 weiter in den Hohlraum 55 hinein verschoben.

Derart verschoben, öffnet der Ventilkörper 52 mehrere Abströmkanäle 58, die als Auslass im Ventildeckel 56 ausgebildet sind und zum Abführen von Fluid aus dem Zylinderraum 42 unter Druck dienen. Ein dazu benötigter Druckaufbau erfolgt beim Hineinfahren eines Kolbens in den Zylinder 12. Der Kolben umfasst dabei die Kolbenstange 24, das Ventilsitzteil 26 sowie den Hochdruckdichtring 40 und ist an seiner Kolbenstange 24 an einem Exzenter 59 abgestützt. Der Exzenter 59 ist mittels einer nicht weiter dargestellten, rotierenden Antriebswelle eines Motors angetrieben und bewegt den Kolben axial im Zylinder 12 hin und her. Dabei wirkt eine sich im Druckraum 42 befindende Rückstellfeder 60 einer hineinfahrenden Kolbenbewegung zum Zurückstellen des Kolbens entgegen.

Ferner ist mit dem Ventildeckel 56 der Zylinder 12 und mit ihm die Filterhülse 18 sowie der Niederdruckdichtring 20 und der Stützring 22 in einer als gestuften Bohrung ausgebildeten Gehäuseöffnung 62 eines blockförmigen Pumpengehäuses 64 zurückgehalten. Das Pumpengehäuse 64 ist mit dem Ventildeckel 56 fluiddicht verschlossen, der damit zugleich als Pumpendeckel dient und einen die Abströmkanäle 58 des Auslasses umfassenden Auslassbereich 66 nach außen abdichtet. Dieser Auslassbereich 66 ist mit einer Dichtschulter 68 am Zylinder 12 zwischen dem Zylinder 12 und der Gehäuseöffnung 62 gegen einen an den Einlassöffnungen 28 befindlichen Einlassbereich 70 abgedichtet.

Die Abströmkanäle 58, von denen in Fig. 1 nur ein Abströmkanal 58 sichtbar ist, sind im Ventildeckel 56 stirnseitig gegenüber des Zylinderbodens 44 vorgesehen und radial an einem den Ventilsitz 46 umgebenden Umfangskanal 72 angeordnet. Der Umfangskanal 72 erstreckt sich stirnseitig gegenüber des Zylinderbodens 44 im Ventildeckel 56 entlang des gesamten Ventilsitzumfangs 49 und verteilt den Volumenstrom des Fluides auf die Abströmkanäle 58.

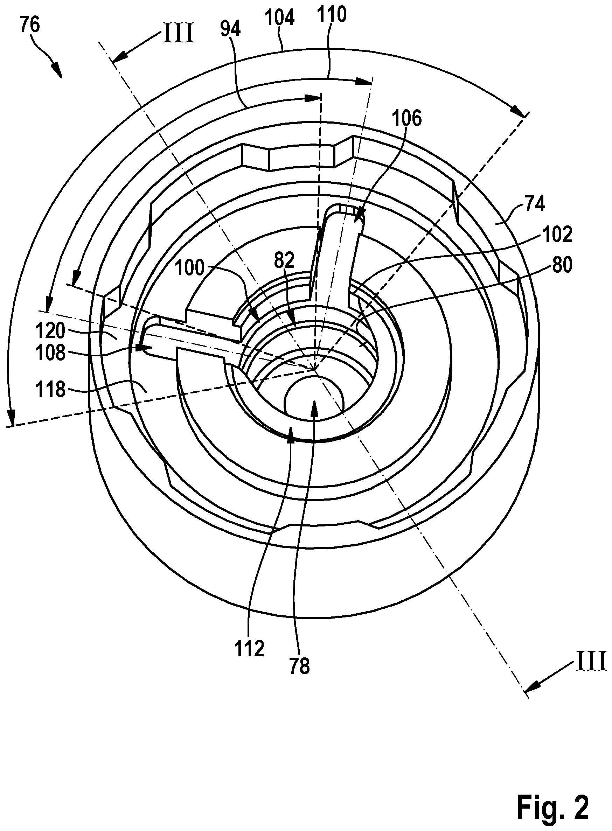

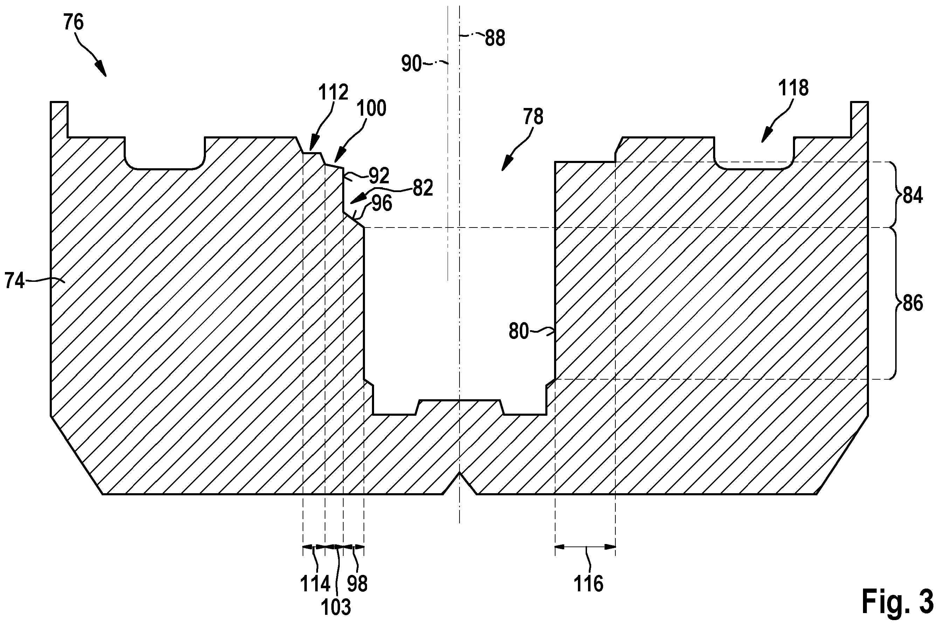

Fig. 2 bis 3 zeigen einen Ventildeckel bzw. ein Aufnahmeelement 74 als relevantes Detail eines Auslassventils 76. Das Auslassventil 76 unterscheidet sich vom Auslassventil 48 nur in der Gestaltung des Aufnahmeelements 74. Deswegen sind die weiteren Bestandteile des Auslassventils 76 in Fig. 2 und 3 nicht weiter dargestellt und entsprechen den Bestandteilen gemäß Fig. 1. So umfasst das Auslassventil 76 den kegelstumpfförmigen Ventilsitz 46, der einen kreisförmigen Ventilsitzumfang 49 aufweist und die Ventilöffnung 50 umgibt. Die Ventilöffnung 50 ist mit einem als Kugel gestalteten Ventilkörper 52 zu verschließen, wozu der Ventilkörper 52 mit einer in dem Aufnahmeelement 74 eingespannten Rückstellfeder 54 gegen den Ventilsitz 46 gedrängt ist.

Vorliegend ist das Aufnahmeelement 74 zugleich der Ventildeckel des Auslassventils 76. Alternativ können das Aufnahmeelement 74 und der Ventildeckel auch zwei Bauteile sein.

Im Unterschied zu dem in Fig. 1 dargestellten Aufnahmeelement bzw. Ventildeckel 56 hat das Aufnahmeelement 74 einen Hohlraum 78 mit einer Innenwand 80, die eine radial nach außen gerichtete Tasche 82 aufweist. Die Tasche 82 ist als Ausbuchtung bzw. Vertiefung in einem, bezogen auf Fig. 2 und 3, oberen Bereich 84 der Innenwand 80 vorgesehen. Ferner weist der Hohlraum 78 einen an den Bereich 84 anschließenden Bereich 86 auf, in dem der Hohlraum 78 als Kreiszylinder mit einer Längsachse 88 gestaltet ist, die in verbautem Zustand deckungsgleich mit der Zylinderachse 16 des Zylinders 12 ist.

Das Aufnahmeelement 74 ist im Auslassventil 76 derart verbaut, dass der obere Bereich 84 zur Ventilöffnung 50 hin gerichtet ist und an die Ventilöffnung 50 angrenzt. Dabei ist die Tasche 82 zur Ventilöffnung 50 hin gerichtet offen und kreiszylindrisch mit einer Längsachse 90 gestaltet, die parallel zur Längsachse 88 des Hohlraums 78 verläuft. Die kreiszylindrische Tasche 82 ist also achsparallel zur Längsachse 88 des Hohlraums 78 ausgebildet und somit exzentrisch zum Hohlraum 78 und damit auch zum Zylinder 12 sowie zur Ventilöffnung 50 angeordnet.

Die Tasche 82 hat eine Taschenwand 92, die sich im Querschnitt des Hohlraums 78 an dessen Innenwand 80 über einen Winkel 94 von etwa 72° erstreckt. Zudem hat die Tasche 82 einen leicht nach unten (bezogen auf Fig. 3) abgeschrägten Taschenboden 96 mit einer Taschenbreite 98.

Von der Tasche 82 ausgehend, zur Ventilöffnung 50 hin gerichtet, ist in der Innenwand 80 in deren oberem Bereich 84 ein Segmentkanal 100 vorgesehen, der sich entlang eines begrenzten Segments 102 des Ventilsitzumfangs 49 erstreckt. Das begrenzte Segment 102 ist als Kreisringsegment mit einer Segmentkanalbreite 103 gestaltet und weist einen Winkel 104 von etwa 145° auf. Innerhalb dieses Winkels 104 sind fluidleitend am Segmentkanal 100 ein erster radialer Abströmkanal 106 und ein zweiter radialer Abströmkanal 108 asymmetrisch zueinander angeordnet. Beide radialen Abströmkanäle 106 und 108 schließen dazu einen Winkel 110 von etwa 90° ein. Zudem sind beide radialen Abströmkanäle 106 und 108 derart am Segmentkanal 100 positioniert, dass sie sich in orthogonaler Projektion der beiden radialen Abströmkanäle 106 und 108 auf eine Ebene mit der Tasche 82 an zwei gegenüberliegenden Endbereichen der Taschenwand 92 und damit an der Tasche 82 befinden.

Zusätzlich zum Segmentkanal 100 sind beide radialen Abströmkanäle 106 und 108 fluidleitend an einem Umfangskanal 112 angeordnet. Der Umfangskanal 112 erstreckt sich im Auslassventil 76 über den gesamten Ventilsitzumfang 49 und ist axial zwischen der Ventilöffnung 50 und dem Segmentkanal 100 angeordnet. Ferner ist der Umfangskanal 112 im Aufnahmeelement 74 zentrisch zur Längsachse 88 des Hohlraums 78 ausgebildet, sodass dessen Umfangskanalbreite 114 am Segmentkanal 100 und damit auch an der Tasche 82 kleiner ist als dessen restliche Umfangskanalbreite 116.

Ferner ist ein Außenkanal 118 vorgesehen, der sich im Aufnahmeelement 74 umfänglich außerhalb des Umfangskanals 112 auch über den gesamten Ventilsitzumfang 49 des Auslassventils 76 erstreckt. In diesen Außenkanal 118 sind fluidleitend beide radialen Abströmkanäle 106 und 108 geführt, durch die mittels des Umfangskanals 112 und des Segmentkanals 100 abgeführtes Fluid in den Außenkanal 118 geleitet werden kann. Durch mindestens eine axiale Nut 120 kann das Fluid vom Außenkanal 118 in den Auslassbereich 66 des Pumpengehäuses 64 abgeführt werden.

Im Längsschnitt weist die Innenwand 80 in deren oberem Bereich 84 eine gestufte Kontur mit in Richtung der Ventilöffnung 50 zunehmendem Querschnitt auf. Die gestufte Kontur ist mittels in gleicher Richtung zunehmenden Maßen der Taschenbreite 98, der Segmentkanalbreite 103 und der Umfangskanalbreite 114 sowie der zur Längsachse 88 exzentrischen Lage der Tasche 82 gebildet. Eine solche Kontur erleichtert ein Hineingleiten des Ventilkörpers 52 in die Tasche 82.

Während eines Förderns von Fluid bzw. eines Pumpvorgangs wird das Fluid unter Druck durch die Ventilöffnung 50 gedrückt und hebt dabei den Ventilkörper 52 von seiner in der Ventilöffnung 50 zentrierten Lage ab. Mittels dabei auftretender Strömungen im Fluid wird der Ventilkörper 52 in die exzentrisch zur Längsachse 88 des Hohlraums 78 ausgebildete Tasche 82 gedrängt und dort in seiner Lage festgehalten. Das Fluid strömt bzw. fließt durch den Umfangskanal 112 und den Segmentkanal 100 sowie durch die beiden radialen Abströmkanäle 106 und 108 in den Außenkanal 118. Vom Außenkanal 118 wird das Fluid durch eine im Aufnahmeelement 74 angeordnete mindestens eine axiale Nut 120 in den Auslassbereich 66 des Pumpengehäuses 64 geleitet.

Die Tasche 82 fungiert also als sogenannte "Kugelzentriertasche", die den Ventilkörper lagedefiniert ausrichtet und hält. Derart gehalten kann das Fluid mit seiner Strömung den Ventilkörper 52 nicht mehr zum Schwingen anregen, sodass störende Strömungsgeräusche vermieden sind und ein besonders geräuscharmes Auslassventil 76 geschaffen ist. Andernfalls würde bei einer ausreichend hohen Strömungsgeschwindigkeit des Fluides das Fluid beim Abströmen durch die Abströmkanäle 106 und 108 den Ventilkörper 52 zum Schwingen und gegebenenfalls auch zum Rotieren anregen.

## Patentansprüche

1. Auslassventil (76) für eine Hydraulikpumpe (10) eines Hydraulikaggregats, mit einer von einem Ventilkörper (52) verschließbaren Ventilöffnung (50) und einem an die Ventilöffnung (50) angrenzenden Aufnahmeelement (74) zum Aufnehmen des Ventilkörpers (52) in einem darin ausgebildeten Hohlraum (78), der eine Längsachse (88) und eine Innenwand (80) umfasst, wobei die Innenwand (80) eine radial nach außen gerichtete Tasche (82) aufweist, **dadurch gekennzeichnet, dass** der Ventilkörper in die Tasche eintreten kann.

2. Auslassventil nach Anspruch 1,
**dadurch gekennzeichnet, dass** die Tasche (82) zur Ventilöffnung (50) hin gerichtet offen ist.

3. Auslassventil nach Anspruch 1 oder 2,
**dadurch gekennzeichnet, dass** die Tasche (82) zylindrisch, insbesondere kreiszylindrisch, und achsparallel zur Längsachse (88) des Hohlraums (78) ausgebildet ist.

4. Auslassventil nach einem der Ansprüche 1 bis 3,
**dadurch gekennzeichnet, dass** sich die Tasche (82) im Querschnitt des Hohlraums (78) betrachtet an dessen Innenwand (80) über einen Winkel (94) von 30° bis 180°, bevorzugt von 40° bis 120° und besonders bevorzugt von 50° bis 90° erstreckt.

5. Auslassventil nach einem der Ansprüche 1 bis 4,
**dadurch gekennzeichnet, dass** axial zwischen der Tasche (82) und der Ventilöffnung (50) mindestens ein radialer Abströmkanal (106, 108) derart vorgesehen ist, dass bei einer orthogonalen Projektion auf eine Ebene des mindestens einen radialen Abströmkanals (106, 108) und der Tasche (82) der mindestens eine radiale Abströmkanal (106, 108) an der Tasche (82) angeordnet ist.

6. Auslassventil nach Anspruch 5,
**dadurch gekennzeichnet, dass** der mindestens eine Abströmkanal (106, 108) ein erster radialer Abströmkanal (106) und ein zweiter radialer Abströmkanal (108) ist, wobei sich der zweite radiale Abströmkanal (108) asymmetrisch zum ersten radialen Abströmkanal (106) erstreckt.

7. Auslassventil nach Anspruch 5 oder 6,
**dadurch gekennzeichnet, dass** der mindestens eine radiale Abströmkanal (106, 108) fluidleitend an einem Umfangskanal (112) angeordnet ist, der einen die Ventilöffnung (50) umgebenden Ventilsitz (46) mit dessen Ventilsitzumfang (49) vollumfänglich umgibt.

8. Auslassventil nach einem der Ansprüche 5 bis 7,
**dadurch gekennzeichnet, dass** der mindestens eine radiale Abströmkanal (106, 108) fluidleitend an einem Segmentkanal (100) angeordnet ist, der einen die Ventilöffnung (50) umgebenden Ventilsitz (46) mit dessen Ventilsitzumfang (49) nur entlang eines begrenzten Segments (102) des Ventilsitzumfangs (49) umgibt.

9. Auslassventil nach Anspruch 8,
**dadurch gekennzeichnet, dass** sich das begrenzte Segment (102) über einen Winkel (104) zwischen 90° und 180°, bevorzugt zwischen 110° und 160° erstreckt.

10. Auslassventil nach einem der Ansprüche 7 bis 9,
**dadurch gekennzeichnet, dass** der mindestens eine radiale Abströmkanal (106, 108) fluidleitend mit einem Außenkanal (118) verbunden ist, der sich umfänglich außerhalb des Umfangskanals (112) über den gesamten Ventilsitzumfang (49) erstreckt.

## Claims

1. Discharge valve (76) for a hydraulic pump (10) of a hydraulic assembly, having a valve opening (50) which can be closed off by a valve body (52) and a receiving element (74) which adjoins the valve opening (50) for receiving the valve body (52) in a cavity (78) formed therein, which cavity (78) comprises a longitudinal axis (88) and an inner wall (80),
wherein the inner wall (80) has a pocket (82) which is directly radially outwards, **characterized in that** the valve body (52) can enter into the pocket.

2. Discharge valve according to Claim 1, **characterized in that** the pocket (82) is open towards the valve opening (50).

3. Discharge valve according to Claim 1 or 2, **characterized in that** the pocket (82) is formed to be cylindrical, in particular circular-cylindrical, and axially parallel to the longitudinal axis (88) of the cavity (78).

4. Discharge valve according to any one of Claims 1 to 3,
**characterized in that** the pocket (82) extends, as seen in the cross-section of the cavity (78), on its inner wall (80) over an angle (94) of 30° to 180°, preferably of 40° to 120° and particularly preferably of 50° to 90°.

5. Discharge valve according to any one of Claims 1 to 4,
**characterized in that**, axially between the pocket (82) and the valve opening (50), at least one radial outflow duct (106, 108) is provided in such a manner that, in the case of an orthogonal projection onto a plane of the at least one radial outflow duct (106, 108) and the pocket (82), the at least one outflow duct (106, 108) is arranged on the pocket (82).

6. Discharge valve according to Claim 5, **characterized in that** the least one outflow duct (106, 108) is a first radial outflow duct (106) and a second radial outflow duct (108), wherein the second radial outflow duct (108) extends asymmetrically to the first radial outflow duct (106).

7. Discharge valve according to Claim 5 or 6, **characterized in that** the least one radial outflow duct (106, 108) is arranged in a fluid-conducting manner on a circumferential duct (112) which surrounds a valve seat (46) surrounding the valve opening (50) over the full circumference with its valve seat circumference (49).

8. Discharge valve according to any one of Claims 5 to 7,
**characterized in that** the least one radial outflow duct (106, 108) is arranged in a fluid-conducting manner on a segment duct (100) which surrounds a valve seat (46) surrounding the valve opening (50) only along a limited segment (102) of the valve seat circumference (49) with its valve seat circumference (49).

9. Discharge valve according to Claim 8, **characterized in that** the limited segment (102) extends over an angle (104) between 90° and 180°, preferably between 110° and 160°.

10. Discharge valve according to any one of Claims 7 to 9,
**characterized in that** the least one radial outflow duct (106, 108) is connected in a fluid-conducting manner to an outer duct (118), which outer duct (118) extends circumferentially outside the circumferential duct (112) over the entire valve seat circumference (49).

## Revendications

1. Soupape d'évacuation (76) pour une pompe hydraulique (10) d'un groupe hydraulique, comprenant une ouverture de soupape (50) pouvant être fermée par un corps de soupape (52), et un élément de réception (74) adjacent à l'ouverture de soupape (50), destiné à recevoir le corps de soupape (52) dans une cavité (78) réalisée dans celui-ci, qui comprend un axe longitudinal (88) et une paroi intérieure (80), la paroi intérieure (80) présentant une poche (82) tournée radialement vers l'extérieur, **caractérisée en ce que** le corps de soupape peut pénétrer dans la poche.

2. Soupape d'évacuation selon la revendication 1, **caractérisée en ce que** la poche (82) est ouverte en direction de l'ouverture de soupape (50).

3. Soupape d'évacuation selon la revendication 1 ou 2, **caractérisée en ce que** la poche (82) est réalisée de manière cylindrique, en particulier cylindrique circulaire, et axialement parallèle à l'axe longitudinal (88) de la cavité (78).

4. Soupape d'évacuation selon l'une quelconque des revendications 1 à 3, **caractérisée en ce que** la poche (82), vue en section transversale de la cavité (78), s'étend au niveau de la paroi intérieure (80) de celle-ci sur un angle (94) de 30° à 180°, de préférence de 40° à 120°, et de plus grande préférence de 50° à 90°.

5. Soupape d'évacuation selon l'une quelconque des revendications 1 à 4, **caractérisée en ce qu'**au moins un canal d'écoulement radial (106, 108) est prévu axialement entre la poche (82) et l'ouverture de soupape (50) de telle sorte que dans une projection orthogonale sur un plan de l'au moins un canal d'écoulement radial (106, 108) et de la poche (82), ledit au moins un canal d'écoulement (106, 108) est disposé au niveau de la poche (82).

6. Soupape d'évacuation selon la revendication 5, **caractérisée en ce que** ledit au moins un canal d'écoulement (106, 108) est un premier canal d'écoulement radial (106) et un deuxième canal d'écoulement radial (108), le deuxième canal d'écoulement radial (108) s'étendant de manière asymétrique par rapport au premier canal d'écoulement radial (106).

7. Soupape d'évacuation selon la revendication 5 ou 6, **caractérisée en ce que** ledit au moins un canal d'écoulement radial (106, 108) est disposé en communication fluidique au niveau d'un canal circonférentiel (112) qui entoure entièrement un siège de soupape (46) avec sa circonférence de siège de soupape (49) entourant l'ouverture de soupape (50).

8. Soupape d'évacuation selon l'une quelconque des revendications 5 à 7, **caractérisée en ce que** ledit au moins un canal d'écoulement radial (106, 108) est disposé en communication fluidique au niveau d'un canal segmenté (100) qui entoure seulement le long d'un segment limité (102) de la circonférence de siège de soupape (49) un siège de soupape (46) avec sa circonférence de siège de soupape (49) entourant l'ouverture de soupape (50).

9. Soupape d'évacuation selon la revendication 8, **caractérisée en ce que** le segment limité (102) s'étend sur un angle (104) compris entre 90° et 180°, de préférence entre 110° et 160°.

10. Soupape d'évacuation selon l'une quelconque des revendications 7 à 9, **caractérisée en ce que** ledit au moins un canal d'écoulement radial (106, 108) est relié en communication fluidique à un canal extérieur (118) qui s'étend de manière circonférentielle à l'extérieur du canal circonférentiel (112) sur toute la circonférence de siège de soupape (49).
